# EUROPEAN PATENT APPLICATION

(11) **EP 4 101 901 A1**
(43) Date of publication of application: **14.12.2022**
(21) Application number: 21183362.9
(22) Date of filing: 02.07.2021
(51) Int. Cl.: C09D 5/00

(54) **SURFACE STRUCTURE OF A BODY AND A METHOD OF MANUFACTURING SUCH A SURFACE STRUCTURE**

(30) Priority: 07.06.2021 CZ 20210287
(71) Applicant: Technicka univerzita v Liberci, 460 01 Liberec, Liberec I-Stare Mesto (CZ)
(72) Inventor: Petrik, Stanislav, 460 15 Liberec, Liberec XV-Stary Harcov (CZ); Voleska, Karolina, 460 01 Liberec, Liberec I-Stare Mesto (CZ); Hrubosova, Zuzana, Liptovska Osada (SK); Krizova, Hana, 47 124 Mimon, Mimon I (CZ)
(74) Representative: Musil, Dobroslav

(57) **Abstract**

The invention relates to a surface structure of a body which contains a plurality of highly hydrophobic regions with a contact angle *θ* from 80° to 170 ° and of highly hydrophilic regions with a contact angle *θ* from 0° to 50 ° arranged side by side, which alternate and whose size ranges from 1µm to 10 cm, wherein the difference between the contact angle θ of the hydrophobic region and the contact angle θ of the hydrophilic region is at least 50 °.

In addition, the invention relates to a method of producing a surface structure of a body in which highly hydrophobic regions with a contact angle θ from 90 ° to 170 ° and highly hydrophilic regions with a contact angle θ from 0 ° to 50 ° are formed on the surface of the body, which alternate and are arranged side by side, their size ranging from 1µm to 10 cm, wherein at least one type of these regions is formed by the application of a transparent impregnating liquid with the appropriate property, which is cured after application to the surface of the body.

## Description

### Technical field

The invention relates to a special surface structure on the surface of bodies and a method of manufacturing such a surface structure.

### Background art

At present, efforts are being made to treat body surfaces with hydrophobizing agents to improve the hydrophobic properties of these surfaces and to reduce their wear. Nanoparticles are widely used for surface modification. Nanoparticles give treated surfaces special properties, such as ease of cleaning, self-cleaning ability, ability to repel water and oil, protection against mechanical damage or, for example, fogging. Nanoparticles most frequently used for impregnation purposes are nanoparticles of metal oxides, such as TiO₂, SiO₂, ZrO₂, Al₂O₃, Fe₂O₃ or ZnO.

Nanotechnologies have more and more impact in virtually all application areas due to the usable properties of nanoparticles. For example, in the surface treatment of bodies with hydrophobic coatings containing nanoparticles, from which coatings of body surfaces are formed, e.g., in ships, this treatment of ship hulls reduces fuel consumption by up to 50 %, by reducing the adhesion of marine plants and animals and thus reducing hydrodynamic resistance.

In general, the lower the aerodynamic air resistance of a vehicle, for example, the more economical its operation. The magnitude of the aerodynamic resistance - drag - is characterized by a drag coefficient cx. The value of this coefficient is a measure of the quality of the car's shape in terms of the airflow around its body.

The hydrophobic coating can be formed on the surface of bodies, for example, by means of a hydrophobizing impregnating liquid with nano-additives according to CZ PV 2015-417, in which the aqueous emulsion of methyl silicone resin with a minimum silicone content of 15 % by weight contains 0.1 % to 60 % by weight of a thickening agent in the form of lanolin and/or cetyl alcohol, and zirconium nanoparticles of zirconium oxide (ZrO₂) in powder form and/or nanoparticles of silicon dioxide (SiO₂) in powder form and/or nanoparticles of titanium dioxide (Ti0₂) in powder form and/or nanoparticles of aluminium oxide (Al₂O₃) in powder form at a concentration of 0.01 g/l to 10.0 g/l of the starting aqueous methyl silicone emulsion, wherein the nanoparticles of the individual oxides in powder form used have a size ranging from 5 nm to 100 nm and can be used either alone or in mutual combination.

This hydrophobizing impregnating liquid forms a hydrophobic film on the surface of bodies which does not need to be thermally stabilized. Complete curing occurs at normal temperature within 24 hours.

Today there are several ways to influence the reduction of aerodynamic or hydrodynamic drag. For example, a material inspired by the structure of sharkskin has been developed that has enabled the development of superfast racing swimsuits for top swimmers. Tiny scales covering the surface of the sharkskin direct the water flow and disrupt the formation of eddies that would otherwise impede the shark's movement. Aircraft face a similar problem, since the turbulent airflow around their surface reduces their efficiency.

Another example of reducing the aerodynamic drag is using the surface structure on golf balls. Today we know that dimpled balls fly further than smooth surface balls due to a combination of several phenomena. First, the dimples delay the separation of the boundary layer of air that surrounds the flying ball. As the trapped air stays attached to the spot longer, it creates a narrower trail of turbulent, lower-pressure air that trails behind the ball, thereby reducing the drag force that pulls the ball back. Second, when a golf club hits a ball, it usually causes a backward rotation. The Magnus effect applies. The speed of the air flowing around the ball is added to the speed of rotation of the ball, and an area of less air pressure is created at the top of the ball than at the bottom. The Magnus effect is intensified by the presence of dimples. Today's golf balls usually have 250-500 dimples, which can reduce air drag by up to half.

Also known are methods of structuring the surfaces of offset printing plates to form hydrophilic and hydrophobic regions. Paint is a hydrophobic liquid that does not mix with water or other similar liquids, for example, with alcohols. When converted into a printing form, the top undisturbed layer is hydrophobic, i.e., it repels water and in turn accepts grease ink/paint. Therefore, to create a print pattern (image), the hydrophobic surface is disturbed in places that are not supposed to print, creating a bottom layer that is hydrophilic, accepts water, which then prevents the grease paint from adhering to that spot. In the places that are supposed to print, the surface is left undisturbed, i.e., hydrophobic.

This surface disruption is performed either in the traditional manner from the films by illumination, where the light disrupts the light-sensitive layer while dark areas on the film protect the layer. The disrupted areas are then washed away by a developer and its light sensitivity is then removed by a fixative agent and the printing mould is ready for use. A new method is to burn the printing mould by a laser. After laser illumination, the printing mould also passes through a developer, though not a photographic one, which removes the disrupted hydrophobic layer from the future non-printing areas and forms a hydrophilic layer on them. The hydrophobic layer, i.e., the undisturbed surface, is then used for printing.

The objective of the invention is to reduce aerodynamic and hydrodynamic drag of bodies during their movement in the relevant environment. The applicant's basic idea was to provide a structure on the surface of a body that would reduce this drag.

### Principle of the invention

The objective of the invention has been achieved by the applicant after performing a plurality of experiments with the treatment of surfaces of bodies by creating a special structure of alternating highly hydrophobic and highly hydrophilic regions on the surface of a body that affect the flow near the surface of the body.

The principle of the surface structure according to the invention consists in that it contains a plurality of highly hydrophobic regions with a contact angle *θ* ranging from 80° to 170° and a plurality of highly hydrophilic regions with a contact angle *θ* ranging from 0° to 50° arranged side by side, which alternate and whose size is in the range of 1µm to 10 cm, the difference between the contact angle θ of the hydrophobic region and the contact angle θ of the hydrophilic region being at least 50°. This treatment reduces the occurrence of micro-vortex near the surface of the body, thereby reducing the aerodynamic drag coefficient and the hydrodynamic drag coefficient.

It is advantageous if at least regions of one type are applied to the surface of the body which is formed by the second type of regions with opposite properties, which they overlap in the respective parts. The advantage is easier application consuming less time.

Another possibility of creating the surface structure is that the two types of regions with opposite properties are applied to the surface of the body alternately side by side, each region being applied separately next to the region with opposite properties. The advantage is the formation of a structure with defined properties.

Another variant consists in that one type of regions is applied to the surface of the body and the second type of regions - the opposite region - is applied to the first type of regions, with the second type of regions removed at selected spots to create alternating regions with opposite properties. This variant can be used especially on materials that require pre-treatment.

The ratio of hydrophobic regions to hydrophilic regions is 1 : 1 to 1 : 3.

To improve abrasion properties and hydrophobicity, the hydrophobic regions contain nano-additives which consist of metal oxide nanoparticles.

It is advantageous if the metal oxides are selected from the group TiO₂, SiO₂, ZrO₂, Al₂O₃, Fe₂O₃ or ZnO, either alone or in combinations.

The method of producing the surface structure according to the invention consists in that highly hydrophobic regions with a contact angle θ ranging from 90° to 170° and highly hydrophilic regions with a contact angle θ ranging from 0° to 50° are formed on the surface of the body, which alternate, are arranged side by side and their size is in the range of 1µm to 10 cm, wherein at least one type of regions is formed by applying a transparent impregnating liquid with appropriate property which is cured after being applied to the surface of the body. The dot formation is performed by screen printing, 3D printing or photolithography.

Furthermore, it is advantageous if the hydrophobizing impregnating liquid contains nano-additives which consist of metal oxide nanoparticles in powder or dispersed form with a grain size of 5 nm to 100 nm. Metal oxides are selected from the group TiO₂, SiO₂, ZrO₂, Al₂O₃, Fe₂O₃ or ZnO, either alone or in combinations. The same nano-additives are used to improve both aerodynamic and hydrodynamic properties.

The advantage of this modification is that after drying on the substrate it forms a transparent film is which does not need to be thermally stabilized or fired in any way. Complete drying occurs after approximately 24 hours at normal outdoor temperature. The required resistance of the special surface structure is provided by nanoparticles and the correct structure is ensured by the method of application.

In one of the methods of application, one type of regions is formed by applying an impregnating liquid with opposite properties to the surface of the body, for example, regions with hydrophobic properties are applied to the surface of the body with hydrophilic properties. Such a structure can be created, for example, by 3D printing or screen printing. The advantage is the accuracy of the structure pattern. This variant is used to create a surface structure with microscale-sized points.

Another possible method is when each type of regions is formed by applying an impregnating liquid with appropriate properties to the surface of the body which can be realized preferably by 3D printing, where both the impregnating liquids are applied simultaneously or sequentially, one after the other, depending on the number of printhead with which the 3D printer is equipped. The advantage is the accuracy of the structure pattern. Like the previous variant, it is used to create a surface structure with microscale-sized points.

Another possibility is that the impregnating liquids are applied in two successive steps by screen printing. This is an easy and inexpensive method of application which is used for applications where shape accuracy of the point is not emphasized.

Another variant is that a body with a hydrophilic surface is coated with a layer of a hydrophobizing impregnating liquid containing a photosensitive substance which is at selected spots/points/regions disturbed by illumination, whereupon the disturbed areas are washed away by a developer and their light sensitivity is removed by a fixative agent, creating hydrophilic regions so that the two types of regions alternate on the surface of the body. This is an easy and inexpensive method of application that is used in applications where the accuracy of the point shape is not emphasized on smaller areas with points in the order of millimetres.

### Exemplary embodiments of the invention

### Example 1

The hull of a ship or other vessel, made of, for example, polycarbonate or other suitable plastic, is coated by 3D printing method with a hydrophobizing impregnating liquid according to CZ PV 2015-417, which in a specific embodiment contains methyl silicone resin, isopropyl alcohol, cetyl alcohol, nanoparticles SiO₂ and ZrO₂ and which forms hydrophobic regions with a contact angle θ from 80° to 170°, in the specific embodiment 110°, and polyethylene oxide in a liquid state which forms hydrophilic regions with a contact angle θ from 0° to 50°, in the specific embodiment 30°. Hydrophobic and hydrophilic regions alternate and have the shape of a square with a side size of 50 µm. Hydrophobic and hydrophilic regions are closely adjacent to each other, i.e., they are connected to each other. After application, the surface of the body is allowed to cure in air for 24 hours.

Screen printing can also be used for coating, whereby the hydrophobic and hydrophilic regions are again square in shape, but their side size is 1 mm.

Before the application, it is advantageous to perform atmospheric plasma treatment of the surface of the vessel to increase adhesion.

In this embodiment, the hydrophobic regions and the hydrophilic regions alternate evenly, however, also uneven alternation of areas may be used, maintaining a ratio of hydrophobic to hydrophilic regions in the range of 1 : 1 to 1 : 3.

### Example 2

An aircraft fuselage or another product made of light metal alloys is treated with phosphoric acid to increase the adhesion of the individual layers and subsequently a hydrophobizing impregnating liquid consisting of a mixture of liquid according to CZ PV 2015-417 and polyvinyl butyral in a ratio of 1:1-1:5 is applied to the aircraft fuselage by 3D printing, forming hydrophobic areas with a contact angle θ from 90° to 170°, in particular 115°. At the same time, a partially cross-linked hydrophilic carboxymethyl cellulose is applied to the surface using a 3D printing method to form hydrophilic regions with a contact angle θ from 0° to 50°, in this case 40°. The hydrophobic and hydrophilic regions alternate and have the shape of a hexagon with a side size of 1 mm. The hydrophobic and hydrophilic regions are closely adjacent to each other, i.e., they are connected to each other. After application, the surface of the body is allowed to cure in air for 24 hours.

### Example 3

The surface structure according to the invention can be applied also to bodies coated with polymeric materials, for example to aircraft surfaces or any bodies made of polymeric materials, where the surfaces of individual parts or the surfaces of whole products are first activated using atmospheric plasma to increase adhesion. For materials with good adhesion, this step does not need to be performed. Subsequently, hydrophobizing impregnating liquid according to CZ PV 2015-417 is applied to the surface of individual parts or whole products by the 3D printing method, creating hydrophobic regions with a contact angle of 120°. Simultaneously or subsequently, the surface is coated with polyethylenoxid which creates hydrophilic regions with a contact angle 40° on the surface. The regions have the shape of a circle with a diameter of 1 mm.

### Example 4

A hydrophobizing impregnating liquid consisting of a mixture of the liquid according to CZ PV 2015-417 and polyvinyl butyral in a ratio from 1 : 1 to 1 : 5, is applied to a glass product, for example plate glass or shaped glass, by means of 3D printing or screen printing method, to form hydrophobic regions with a contact angle θ from 90° to 170°, in particular 120°. Since the glass surface is hydrophilic because it has a low contact angle θ from 0° to 50°, on average 35°, hydrophobic regions are formed on the glass surface in this way, alternating with the hydrophilic regions formed by the glass surface. In this alternative, hexagonal-shaped regions with a side size of 1 mm are formed.

The surface structure of alternating hydrophobic and hydrophilic points created by means of 3D printing or screen printing method can be used in many areas, especially in the treatment of the surface of bodies which are to move through space at high speed to reduce their aerodynamic or hydrodynamic drag, for example in the automotive industry, in aviation, in the manufacture or modification of vessels, in the modification of the surface of ammunition and the like. In addition, this surface structure can be used also in construction industry for the treatment of building surfaces, roofs, internal surfaces of sewerage systems, internal surfaces of pipes and the like, where it replaces today's common hydrophobic treatment and achieves better results. For example, if snow on a roof with only with hydrophobic treatment thaws, the water freezes, whereas if the roof is treated with the surface structure according to the invention, the water does not freeze and snow thaws faster. The size and shape of the points/regions and their mutual alternation is variable and is closely related to the size of the treated body and the required application. For example, for the surface of the aircraft, the alternation of smaller regularly alternating areas at the microscale is used. The same parameters can also be used in pipeline applications. On the roof of a house, the size of the hydrophobic and hydrophilic regions of the surface structure according to the invention can be up to 10 cm of different shapes depending on the inclination and shape of the roof. The same or similar sized regions of the surface structure can be used in the treatment of internal surfaces of sewerage systems. Generally, the size of the alternating hydrophobic and hydrophilic regions is in the range of 1µm to 10 cm. When creating the surface structure, it is also possible to use the properties of the treated surface of the material and create only a part of the structure with opposite properties, see example 4. The shape of the points can be square, rectangular, circular, elliptic and polygonal. The possibilities of alternating points are regular, e.g., checkerboard pattern, alternating in stripes, or irregular alternation. The thickness of the surface structure ranges from 1µm to 1 cm.

### Example 5

The surface structure of alternating hydrophobic and hydrophilic points/regions may alternatively be formed by using a UV photolithography method based on using a light-sensitive photosensitive substance used to form a patterned coating on the surface. The process begins by coating a substrate with a hydrophilic surface with the hydrophobic organic light-sensitive material, for example the hydrophobizing impregnating liquid according to CZ PV 2015-417 containing silver iodide, which constitutes the photosensitive component. The hydrophobic layer is disturbed by illumination at the selected spots/points/regions, after which the disturbed areas are washed away by a developer and the light-sensitivity of the hydrophobic areas is removed by a fixative agent. Thus, alternating hydrophilic and hydrophobic regions are formed on the surface.

### Example 6

In order to increase the adhesion between the surface to be treated and the impregnating liquid(s) applied to it, the surface can be pre-treated (activated) by chemical activation or plasma. Surface activation is used to open the ends of closed chains of materials that can then react further. The most common method for activating plastics is atmospheric plasma, which is generated at atmospheric pressure. This activation results in an increase in the surface tension of the material and thus improves the wettability of the surface and at the same time removes contaminants from the activated surface. Nitric acid and phosphoric acid are most commonly used for the chemical activation, especially for the chemical activation of metallic materials.

### Example 7

The abrasion resistance of the desired surface structure and its hydrophobicity can be increased by using suitable nanoparticles contained in the hydrophobizing impregnating liquid/emulsion. Nanoparticles, especially ZrO₂, SiO₂, Al₂O₃, and others, for example TiO₂, Fe₂O₃ or ZnO, can be used for their hydrophobizing effects, either alone or in combinations. Nanoparticles are added to impregnating liquids as additives which are commonly available in powder form or dispersions.

## Claims

1. A surface structure of a body, **characterized in that** it contains a plurality of highly hydrophobic regions with a contact angle *θ* ranging from 80° to 170° and of highly hydrophilic regions with a contact angle *θ* ranging from 0° to 50° arranged side by side, which alternate and whose size is in the range of 1µm to 10 cm, wherein the difference between the contact angle θ of the hydrophobic region and the contact angle θ of the hydrophilic region is at least 50°.

2. The surface structure of a body according to claim 1, **characterized in that** at least some of one kind of the regions are applied to the surface of the body, which is formed by the other type of regions with opposite properties, which they overlap in the respective parts.

3. The surface structure of a body according to claim 1, **characterized in that** the two regions with opposite properties are applied alternately side by side on the surface of the body.

4. The surface structure according to claim 1, **characterized in that** one type of the regions is applied to the surface of the body and the other opposite region is applied to the first region, with the second region removed in selected places.

5. The surface structure of a body according to any of claims 1 to 4, **characterized in that** the ratio of the hydrophobic to hydrophilic regions is in the range of 1 : 1 to 1 : 3.

6. The surface structure of a body according to any of the preceding claims, **characterized in that** the hydrophobic regions contain nano-additives that consist of metal oxide nanoparticles.

7. The surface structure of a body according to claim 6, **characterized in that** the metal oxides are selected from the group TiO₂, SiO₂, ZrO₂, Al₂O₃, Fe₂O₃ or ZnO, either alone or in combinations.

8. A method of manufacturing the surface structure of the body according to any of the preceding claims, **characterized in that** highly hydrophobic regions with a contact angle θ from 90 ° to 170 ° and highly hydrophilic regions with a contact angle θ from 0 ° to 50 ° are formed on the surface of the body, which alternate and are arranged side by side, their size ranging from 1µm to 10 cm, wherein at least one of these regions is formed by applying a transparent impregnating liquid with the appropriate property, which is cured after being applied to the surface of the body.

9. The method according to claim 8, **characterized in that** hydrophobic impregnating liquid contains nano-additives which consist of metal oxide nanoparticles in powder or dispersed form with a grain size of 5 nm to 100 nm.

10. The method according to claim 9, **characterized in that** the metal oxides are selected from the group TiO₂, SiO₂, ZrO₂, Al₂O₃, Fe₂O₃ or ZnO, either alone or in combinations.

11. The method according to any of claims 8 to 10, **characterized in that one type of** regions is formed by applying a transparent impregnating liquid with properties opposite to the surface of the body.

12. The method according to any of claims 8 to 10, **characterized in that each type of the regions** is formed by applying of a transparent impregnating liquid with appropriate properties to the surface of the body.

13. The method according to claim 11 or 12, **characterized in that** the impregnating liquids are applied in two successive steps by screen printing.

14. The method according to claim 11 or 12, **characterized in that** the impregnating liquids are applied to the surface of the body simultaneously or subsequently by 3D printing method.

15. The method according to claim 11, **characterized in that** a layer of a hydrophobic impregnating liquid containing a photosensitive substance is applied to the body with a hydrophilic surface, whereby the layer is disturbed by illumination at selected spots/points/regions, whereupon the disturbed spots are washed away by a developer and the photosensitivity of the hydrophobic regions is removed by a fixative agent, thus creating alternating hydrophilic and hydrophobic regions.
